# EUROPEAN PATENT APPLICATION

(11) **EP 0 766 366 A1**
(43) Date of publication of application: **02.04.1997**
(21) Application number: 96114600.8
(22) Date of filing: 12.09.1996
(51) Int. Cl.: H02K 9/06, H02K 11/04, B62D 5/07

(54) **Power steering unit**

(30) Priority: 29.09.1995 IT TO950214 U
(71) Applicant: BITRON S.p.A., 10064 Pinerolo (Torino) (IT)
(72) Inventor: De Filippis, Pietro, 20052 Monza (MI) (IT); Fasola, Giancarlo, 20124 Milano (MI) (IT); Navarra, Pietro, 20093 Cologno Monzese (MI) (IT)
(74) Representative: Lotti, Giorgio

(57) **Abstract**

A power steering unit comprises a hydraulic pump (10) and an electric motor (11) for driving said pump (10). The electric motor (11) is a brushless electric motor with relevant control and power electronic components (23). The pump (10), the electric motor (11) and the electronic components (23) are form a single body. An axial, central cooling duct (30) is provided through the rotor (12) of the electric motor (11). At the interface between the pump (10) and the motor (11), duct (30) forms a plurality of radial channels (21) integral with the rotor and adapted for centrifuging and expel radially air drawn into the duct (30). The air flowing in the duct (30) and the channels (21) cools the electronic components (23), the electric motor (11) and the pump (10).

## Description

The present invention refers to a power steering unit of the type comprising a hydraulic pump and an electric driving motor.

It is known that automobile power steering assemblies are provided with a pump which is driven by a motor. In the past, the vehicle engine was used for this purpose. In more recent units, the pump is driven by a direct current electric motor having a special electric circuit for controlling its operation. The circuit is located apart from said motor.

An object of the present invention is to make use of a brushless electric motor for driving the pump of the power steering unit, attaining all known advantages that are typical of this kind of electric motor, that is versatile, simple, reliable and needs very little maintenance.

It is another object of the present invention to provide a particularly compact power unit taking up little space within the vehicle.

It is a further object of the present invention to provide a steering power unit having a particular arrangement allowing for efficient cooling of both the brushless electric motor and its relevant power and signal electronic components, while preventing the motor from being affected by the heat generated by the hydraulic pump, and vice versa.

These and further objects which will be more apparent hereinafter are attained according to the present invention by the provision of a power steering unit comprising a hydraulic pump and an electric motor for driving said pump, characterised in that the electric motor is a brushless electric motor with relevant control and power electronic components; the pump, the electric motor and the electronic components being joined forming a single body; at least one substantially axial, central cooling duct being provided through the rotor of said electric motor, said duct forming at the interface between the pump and the motor a plurality of substantially radial channels integral with the rotor and adapted for centrifuging and expel radially air drawn into the duct, whereby the air flowing in said duct and said channels cools said electronic components, said electric motor and said pump, and reduces heat being transmitted between the pump and its motor.

For a better understanding of the present invention, reference is made to the following detailed description of various exemplary embodiments considered in combination with the accompanying drawings in which:
- FIG. 1: is a top view of a first embodiment of the steering power unit arranged in accordance with the present invention;
- FIG. 2: is an axial sectional view taken along line II-II of FIG. 1;
- FIG. 3: is an exploded perspective view of the unit of FIGS. 1 and 2; and
- FIGS. 4 and 5: are two views similar to those of FIGS. 1 and 2, respectively, depicting an alternative embodiment of the unit of this invention but which attains the same performances of the first one.

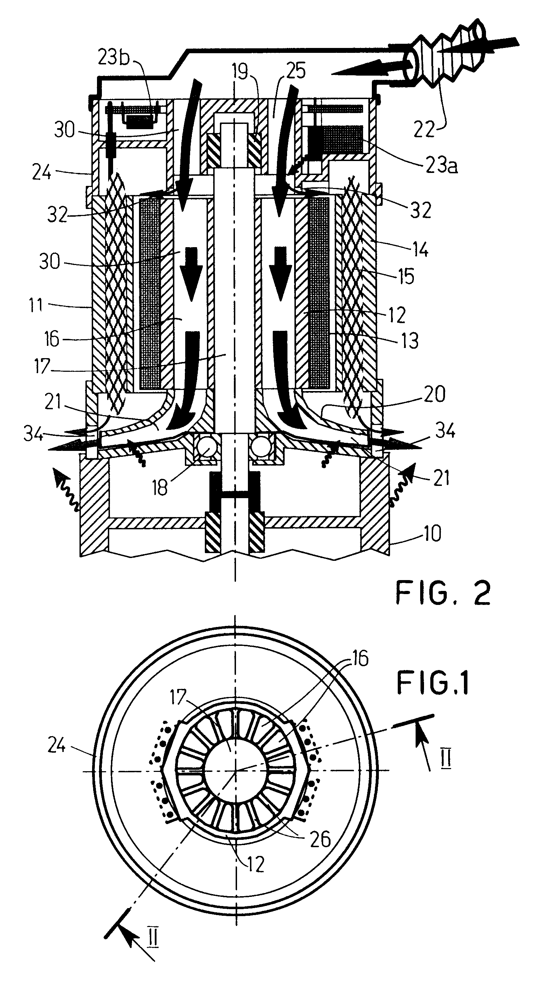

With reference initially to FIGS. 1 to 3, the integrated unit according to the present invention is a compact unit comprising a power steering hydraulic pump 10 driven by a brushless electric motor 11. Hydraulic pump 10, which is partially shown, is of conventional kind and therefore is not described in detail herein. The brushless electric motor 11, known per se, is comprised of an inner rotor 12 with permanent magnets 13 and an outer stator 14 having peripheral coils 15.

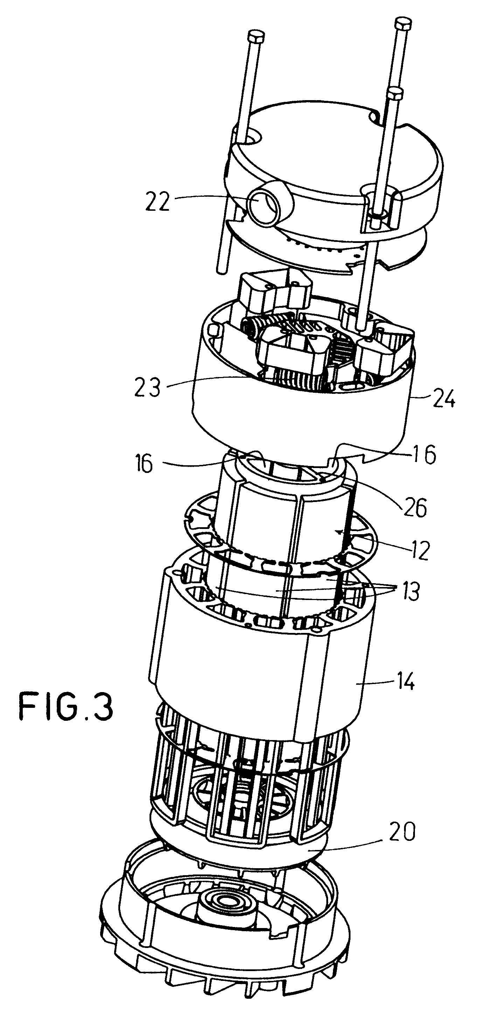

Rotor 12 has an axial aperture 16 and is force fitted to a rotary shaft 17. Shaft 17 rests on a base bearing 18 and rotates in a top bushing 19. In accordance with this invention, the rotor is secured to a fan 20 which is also force fitted to rotary shaft 17. Fan 20 is advantageously located at the interface between the body of hydraulic pump 10 and the electric motor 11. As shown in FIG. 2, the axial aperture 16 of the rotor is extended within the fan 20 providing a number of radial channels 21 for centrifuging air from the rotor cavity 16. In rotating, the fan sucks air from the top through the electric motor 11, cooling it.

In the illustrated example there is provided an upper cap 22 with an air intake, it being understood that the shape of the air inlet zone may differ according to requirements as a function of the space which is available around the power steering unit.

Still in accordance with the present invention, the unit also comprises integrated electronic power components 23a and a signal printed circuit electronic card 23b for controlling operation of the brushless electric motor 11. Fan 20 is rotated by rotor 12 and draws air downwards. Advantageously, this air also flows on an annular receptacle or dissipator 24 containing the electronic components 23a, 23b covered with resin. Also, receptacle 24 provides a central aperture 25 substantially lined up with the rotor central aperture 16. In other words, an inner air cooling duct 30 is provided through the unit and branches in a radial manner at the interface with the pump. The air passing through said duct cools the electronic components 23, the electric motor 11 and the hydraulic pump 10. Further, as the radial channels 21 of such duct are interposed between the pump and the motor, the air flowing through them cuts down drastically the amount of heat generated by the pump that can be transmitted by convection to the motor, and vice versa.

In addition, as illustrated for example in FIG. 2, the channel walls separating the channels from the motor are so shaped as to prevent vortexes from forming and loss of efficiency in the air flow.

The central duct 30 is constituted of a plurality of adjacent ducts. In their first portion, they are delimited by axial fins 26. The further length of duct 30 is delimited by the rotor aperture, and the end portion is formed by the fan 20. Particularly, fins 26 (which are also visible in the top view of FIG. 1, where the upper cap has been removed for illustration purposes) of annular receptacle 24 form the part of the dissipator which dissipates the heat of the electronic components as it is exposed to the air flux within aperture 25.

As will apparent, the disclosed arrangement according to the present invention provides for simultaneous and efficient cooling of the electronic components, the pump and its actuating motor, without having to install a special device for this purpose. The purpose is attained through a new arrangement of the power unit members and by the provision of a fan as discussed above.

Still referring to FIG. 2, to further enhance cooling performance of the unit, the radial channels 21 have a progressively decreasing cross-section in the direction of advancement of the flow of air, such that the air at the output is accelerated (Venturi tube effect). As a result, the provision of a plurality of radial openings 32 at the top of the slots containing the stator coils 15 causes the vacuum at the output of channels 21 to provoke a secondary, peripheral air flow through the slots. This secondary air flow, while being much less than the central one, flows directly on the coils, cooling same and flows out of lower outputs 34 being sucked by the air leaving fan 20 through the same outputs 34.

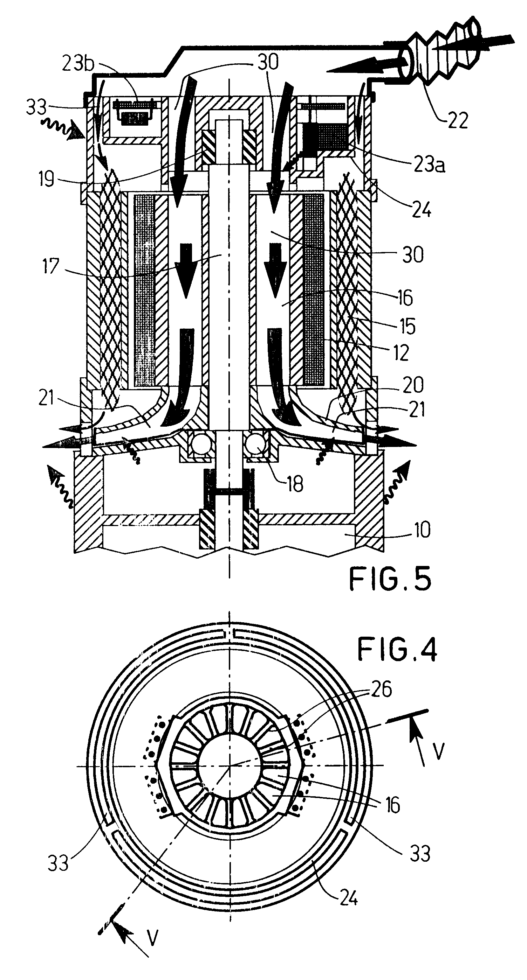

Referring now to FIGS. 4 and 5, in a modification of the present invention the inlet of air in the slots is provided through a peripheral cylindrical gap 33 delimited between the dissipator 24 and the outer wall of the unit. This alternative embodiment enables to thermally insulate those parts containing electronic components from the external environment, thereby reducing heat passageways and performing cooling also to the outer walls of the unit.

According to a further variant embodiment of this invention (not shown), the rate of flow of the stator coils secondary cooling flow can be increased by providing an additional fan secured to the rotor immediately before the inlet zone of the slots, i.e. between the dissipator 24 and the rotor 12. in this case the fan would supply additional air directly onto the coils 15 and further increase efficiency thereof.

## Claims

1. A power steering unit comprising a hydraulic pump (10) and an electric motor (11) for driving said pump (10), characterised in that the electric motor (11) is a brushless electric motor with relevant control and power electronic components (23); the pump (10), the electric motor (11) and the electronic components (23) being joined forming a single body; at least one substantially axial, central cooling duct (30) being provided through the rotor (12) of said electric motor (11), said duct forming at the interface between the pump (10) and the motor (11) a plurality of substantially radial channels (21) integral with the rotor and adapted for centrifuging and expel radially air drawn into the duct (30), whereby the air flowing in said duct and said channels cools said electronic components (23), said electric motor (11) and said pump (10), and reduces heat being transmitted between the pump (10) and its motor (11).

2. A power steering unit as claimed in claim 1, characterised in that said channels (21) are formed by a fan (20) rotating fast with the rotor (12).

3. A power steering unit as claimed in claim 1, characterised in that the electronic components (23) for controlling the brushless electric motor (11) are disposed within an annular dissipator receptacle (24) having heat dissipating fins (26) located in a central dissipator aperture (25) substantially aligned with at least one corresponding central axial aperture (16) of the rotor, said dissipator aperture (25) forming said axial duct (30) with said rotor aperture (16).

4. A power steering unit as claimed in claim 1, characterised in that said radial channels (21) are spaced from the motor by walls conveying the air flow towards the outlet, said walls being adapted to prevent formation of vortexes and loss of efficiency.

5. A power steering unit as claimed in claim 1, characterised in that the air flowing out of said channels (23) provides a vacuum which is capable of sucking a secondary flow of air through the stator (14) slots so as to cool the coils located therein.

6. A power steering unit as claimed in claim 5, characterised in that a plurality of radial openings (32) are provided in the stator (14), said radial openings providing communication between the stator slots and said central duct (30).

7. A power steering unit as claimed in claim 5, characterised in that the top of the slots communicates with a peripheral opening (33) between the outer wall of the unit and the dissipator (24).

8. A power steering unit as claimed in claim 3, characterised in that said annular receptacle (24) is filled with resin providing total protection for electronic components located therein.
